# EUROPEAN PATENT APPLICATION

(11) **EP 1 845 719 A1**
(43) Date of publication of application: **17.10.2007**
(21) Application number: 07007437.2
(22) Date of filing: 11.04.2007
(51) Int. Cl.: H04N 5/74, H05K 9/00

(54) **Projector**

(30) Priority: 12.04.2006 JP 2006110091
(71) Applicant: Funai Electric Co., Ltd., Daito-shi, Osaka 574-0013 (JP)
(72) Inventor: Ohno, Yuji, Daito-shi, Osaka (JP)
(74) Representative: Grünecker, Kinkeldey, Stockmair & Schwanhäusser Anwaltssozietät

(57) **Abstract**

A projector has a function to suppress unnecessary radiation (EMI) from a digital substrate even in a narrow space. To this end, the projector includes a digital substrate arranged approximately in perpendicular to the bottom surface of a case, an input/output substrate arranged at the upper portion of the rear side of the digital substrate, being approximately in parallel to the bottom surface of the case by using a metal frame, and a shielding plate having a shielding surface with an approximately rectangular cross section, so as to cover a device mount surface of the digital substrate and at the same time, contact the shielding plate and the frame.

## Description

### Technical Field to which the Invention Belongs

The present invention relates to a projector, more specifically to a projector having a function to suppress unnecessary radiation of electromagnetic interference such as noises.

### Related Background Art

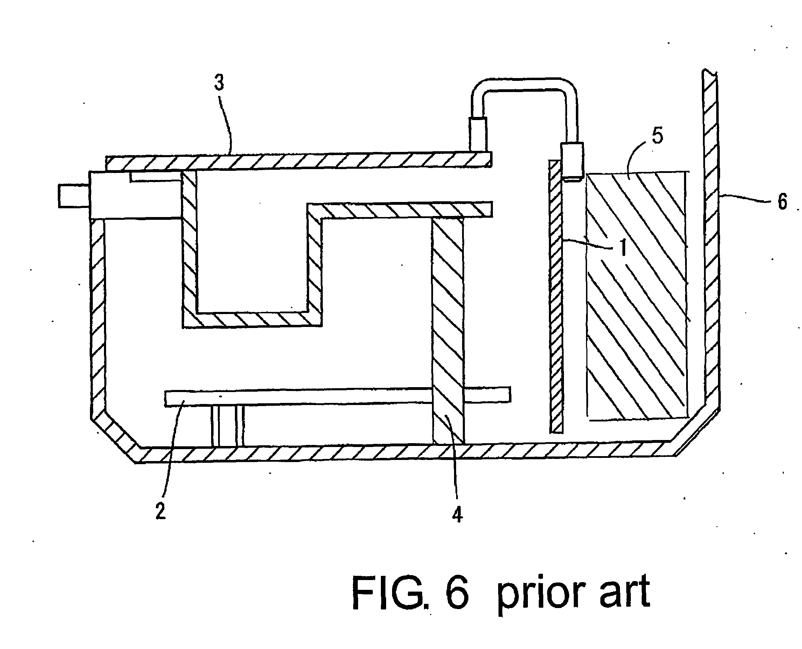

Examples of a circuit substrate for use in a projector include a digital substrate 1 mounted with an IC circuit for controlling a DMD or color wheel, a power substrate 2 for supplying power, and an input/output (I/O) substrate 3 mounted with an input terminal at which audio or video signals from external equipment are received, or an IR converting unit for receiving an IR signal transmitted from a remote controller. Fig. 6 shows a circuit arrangement of a projector. As shown in Fig. 6, a digital substrate 1, a power substrate 2, and an I/O substrate 3 are arranged on the rear side of an optical system 5 by using a case 6 and a metal frame 4, in which the digital substrate 1 is arranged nearly perpendicular to the bottom of the case 6, the power substrate 2 is arranged nearly horizontal to the bottom of the case, and the I/O substrate 3 is arranged on the upper portion of the rear side of the digital substrate 1 by using the frame 4.
At this time, unnecessary electromagnetic interference (EMI) is radiated from an IC circuit of the digital substrate 1. EMI is radiated high frequency noise that is output besides original signals. EMI is known to have an adverse effect on a signal line 3a that electrically connects the digital substrate 1 and the I/O substrate 3, leading to a malfunction of the circuit.
In a technology disclosed in Japanese Unexamined Patent Application Publication (JP-A) No. 2005-070516, as a countermeasure for EMI from a projector, a fan driving circuit and an optical modulation device control circuit are arranged on the same substrate, and the optical modulation device control circuit is covered with a shielding plate.
In a technology disclosed in JP-A-2004-205714, as a countermeasure for EMI when using a resin-made case, a shielding plate is fixed to the case through a falling preventing part.
Moreover, in a technology disclosed in JP-A-2003-215700, as a countermeasure for noise of a power source unit, the power source unit is covered with a shield case of a specific shape. The same technology is also described in JP-A-2000-321664.

Technologies disclosed in JP-A-2005-070516, JP-A-2004-205714, JP-A-2003-215700, and JP-A-2000-321664 are not related to the suppression of EMI radiated from an IC circuit arranged on the digital substrate. Furthermore, in case that there is no sufficient space inside the case for arranging the shielding plate, the shielding plate interferes with other constituents if an additional substrate and the like is arranged after a shielding plate was already installed. Therefore, it is necessary to take the shape of the shielding plate into consideration from the design phase.

Besides, as in the technology disclosed in JP-A-2003-215700 and JP-A-2000-321664, if a protection target from EMI is covered with a shielding case, the IC circuit being covered with the shielding case cannot radiate heat easily, which leads to the destruction of the IC circuit.

### Disclosure of the Invention

The present invention has been archived under these circumstances, and an object of the present invention is to provide a projector, which can be used at a position inside a case having no space available, does not interfere with cooling of an IC circuit, and suppresses unnecessary radiation of electromagnetic interference from a substrate mounted with the IC circuit.

The present invention has achieved the above objects and provides the projector, comprising: a case; a projection lens arranged at a side of the case;
a lamp arranged in the case for projecting a light source in a width direction, given that a plane mounted with the projection lens of the case is designated as a front surface, front and rear sides of the front surface are designated as a front-to-rear direction, and a right-to-left direction thereof is designated as the width direction;
a color wheel rotating a color filter at predetermined speed, the color filter comprising a set of color filters comprising different spectrum filters according to a predetermined range of angle, while arranging the color filter in a way that incident light from the lamp to the color filter is projected in the width direction;
a light pipe collimating light having passed through the color wheel to an approximately parallel light;
a mirror arranged to reflect a light source projected from the light pipe towards the rear side;
Digital Micro-Mirror Device arranged at a rear portion of the projection lens, for changing luminance of the incident light source from the mirror with a plurality of micro mirrors arranged in a predetermined array, and projecting the light source with the changed luminance to the projection lens;
a digital substrate having a device mount surface formed on side to mount an integrated circuit (IC) that controls one of the Digital Micro-Mirror Device and the entire circuit;
a power source on a power substrate for supplying required power to the digital substrate; an input/output substrate for mounting input/output terminals, and converting an infrared signal transmitted from a remote control to a control signal of a predetermined voltage level and outputting the control signal to the digital substrate;
a fan arranged at an end portion in the width direction of the case for cooling heat inside the case; and
a metal frame comprising of a substrate fixing surface to which the input/output substrate is fixed by a fastener, and foot sections formed by extension in substantially perpendicular direction to the substrate fixing surface and being fixed to the case by fasteners to arrange the input/output substrate at a predetermined position of the case;
the digital plate is arranged approximately in perpendicular to the bottom surface of the frame while making, on the rear side of the projection lens, a device mount surface of an the IC circuit face the rear side while the IC circuit is covered with a thin shielding plate capable of suppressing unnecessary radiation ofEMI from the IC circuit mounted on the device mount surface,
wherein a frame fastener secures the input/output substrate to the upper portion of the rear side of the digital substrate so as to make the input/output substrate be approximately in parallel to the bottom surface of the case, and
the shielding plate is composed of a rectangular thin shielding surface, a cushion surface having a wrinkled shape that is formed by bending one end of the shielding surface by a predetermined length, and a pair of foot surfaces, each of which is extending part of both sides of the shielding surface, respectively, by a predetermined length in an opposite direction of the bending direction of the cushioning surface in which the foot surfaces and the digital substrate are soldered to make the shielding surface cover the device mount surface of the digital substrate while making an end portion of the cushioning surface contact with the rear surface of the substrate fixing surface of the frame.

In the present invention, the digital substrate is arranged to be approximately in perpendicular to the bottom surface of the frame while making, on the rear side of the projection lens, a device mount surface of an IC circuit face the rear side and at the same time, is covered with a thin shielding plate capable of suppressing unnecessary radiation of EMI from the IC circuit mounted on the device mount surface. The frame screw fixes the input/output substrate to the upper portion of the rear side of the digital substrate, so as to make the input/output substrate be approximately in parallel to the bottom surface of the case. The shielding plate is composed of a thin shielding surface in a rectangular shape, a cushion surface having a wrinkled shape that is formed by bending one end of the shielding surface by a predetermined length, and a pair of foot surfaces, each of which is formed by having one side with the cushioning surface as a vertical side, and extending part of both sides of the shielding surface 18a, respectively, by a predetermined length in an opposite direction of the bending direction of the cushioning surface. Inside the case, when soldering the shielding plate to the digital plate, the foot surfaces and the digital substrate are soldered to make the shielding surface cover the device mount surface of the digital substrate and at the same time, to make an end portion of the cushioning surface contact with the rear surface of the substrate fixing surface of the frame. Therefore, unnecessary radiation (EMI) from the digital substrate can be effectively suppressed even in a narrow space.

Another aspect of the invention provides a projector, including: an optical unit for projecting an image by using a projection lens, based on a light source from a lamp;
a digital substrate mounted with a digital integrated circuit (IC) for controlling the optical unit;
an input/output substrate mounted with an input terminal at which one of video signals and audio signal from external equipment are received and a remote control signal receiving unit; and
a metal frame which arranges the input/output substrate on the upper portion of the rear side of the digital substrate while grounding the input/output substrate, and
a substantially rectangular shielding plate fixed to the digital substrate, covering IC circuits mounted on a device mount surface of the digital substrate, while contacting the shielding plate and the frame.

In the invention, in order to suppress unnecessary radiation of ENI from the digital substrate, the device mount surface that causes EMI is covered with the shielding plate.
At this time, by arranging the shielding plate and the frame in a way that they come in contact with each other, EMI is discharged from the shielding plate to the ground of the frame. Therefore, unnecessary radiation (EMI) from the digital substrate can be effectively suppressed even in a narrow space.

And, in the present invention, the shielding plate is formed in a thin shape to provide an elastic force in a thickness direction of a rectangular cross-section thereof, includes a cushioning surface formed by bending one end of the shielding surface by a predetermined length, and is fixed to the digital substrate to contact the frame and the cushioning surface.

In the present invention with the above-described configuration, since the frame of the shielding plate comes in contact with the cushioning surface where an electric force is provided, the frame and the shielding plate can contact with each other by this elastic force formed on the cushioning surface. That is, the assembly of substrates can be done easily by providing an electric force to the input/output substrate of the shielding plate or the contact surface between the shielding plate and the frame.

Moreover, in the present invention, the shielding plate includes a pair of foot surfaces, each of which is formed by having one side with the cushioning surface as a vertical side, and extending part of both sides of the shielding surface, respectively, by a predetermined length in an opposite direction of the bending direction of the cushioning surface, and is fixed to the digital substrate in use of the foot surfaces.

In the present invention with the above-described configuration, since the shielding plate is fixed to the digital substrate by the foot surfaces, gap is formed between the shielding plate and the device mount surface of the digital plate. Therefore, it becomes possible to reduce the heat generation of devices such as IC circuits and the like, with the help of the gap formed between the shielding plate and the device mount surface of the digital plate.
Further objects, features and advantages of the present invention will become apparent from the following description of the preferred embodiments with reference to the attached drawing.

### Brief Description of the Drawings

Fig. 1 is a schematic block diagram of a projector, according to one embodiment of the present invention;
Fig. 2 shows an optical system layout, according to one embodiment of the present invention;
Fig. 3 is a top view of an optical system and every substrate arranged in a case, according to one embodiment of the present invention;
Fig. 4 is a front view and a side view of a shielding plate, according to one embodiment of the present invention;
Fig. 5 is a side view showing every substrate arranged in a case, according to one embodiment of the present invention; and
Fig. 6 is a side view showing substrates arranged in a conventional case.

### Description of Special Embodiments

A projector according to an embodiment of the present invention will be explained in an order as follows:
(1) Configuration of Projector
(2) Configuration of Shielding Plate
(3) Summary

### [1. Configuration of Projector]

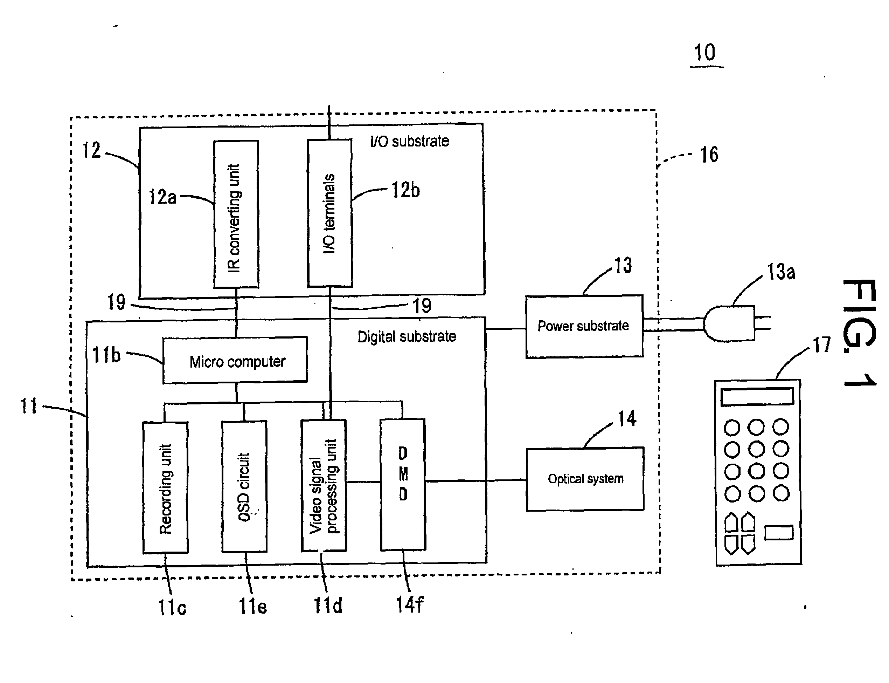

An embodiment of the projector according to the present invention will be described below with reference to Fig. 1 - Fig. 5. Fig. 1 is a schematic block diagram of a projector 10 according to one embodiment the present invention. The projector 10 has a structure capable of accommodating an optical system 14 projecting an image to a box-shaped case 16 by using a light source, a digital substrate 11 for controlling the optical system 14, a power substrate 13 for supplying necessary power to the digital substrate 11, and an input/output (I/O) substrate for inputting video and audio signals from external equipment such as a PC and at the same time, receiving an operation signal transmitted from a remote controller 17. The parts constituting the projector 10 and the function of the projector 10 will be explained below.

The I/O substrate 12 is mounted with I/O terminals 12b and an IR converting unit 12a, and outputs signals from the I/O terminal 12b and the IR converting unit 12a to the digital substrate 11. The I/O terminals 12b include a video terminal and an audio terminal for receiving video signals and audio signals, respectively, from external equipment such as a PC, and outputs video signals and audio signals inputted through the video terminal or the audio terminal to the digital substrate 11. The IR converting unit 12a receives an IR operation signal from the remote controller 17 and at the same time, converts the received IR signal to an operation signal at a predetermined voltage level, and outputs it to the digital substrate 11. Signals from the I/O terminals 12b and the IR converting unit 12a are outputted to the digital substrate 11 via a signal line 19.

The digital substrate 11 is mounted with IC elements constituting a microcomputer 11b on one side, a recording unit 11c, a video signal processing circuit 11d, and an OSD circuit 11e. In the digital substrate 11, the microcomputer 11b, the recording unit 11c, the video signal processing circuit 11d, and the OSD circuit 11e are connected to a bus. The microcomputer 116 receives an operation signal from the IR converting unit 12a, and gives a predetermined command to the video signal processing circuit and the OSD circuit 11e, based on a preset program in the recording unit 11c, while controlling the entire circuit at the same time. As for the recording unit 11c, ROM, RAM, hard disk and the like can be used.

The video signal processing circuit 11d converts an input video signal from the I/O terminals 12b through the signal line into an RGB signal of three primary colors of R, G, and B, corrects the color level of the RGB signal by a control signal that is outputted from the microcomputer 11b, and outputs the corrected RBG signal to the optical system 14.
The OSD circuit 11e is connected to the video signal processing circuit 11d, and generates an OSD signal to superpose it on a video signal. The digital substrate 11, under the control of the microcomputer 11b, receives an operation signal from the IR converting unit 12a, and generates an OSD signal corresponding to the received operation signal.

The power substrate 13 rectifies external power which is supplied through an outlet 13a by a rectifier circuit composed of a thyristor (SCR), generates AC power required to drive the protector 10, and supplies the AC power to the digital substrate 11 and the optical system 14.

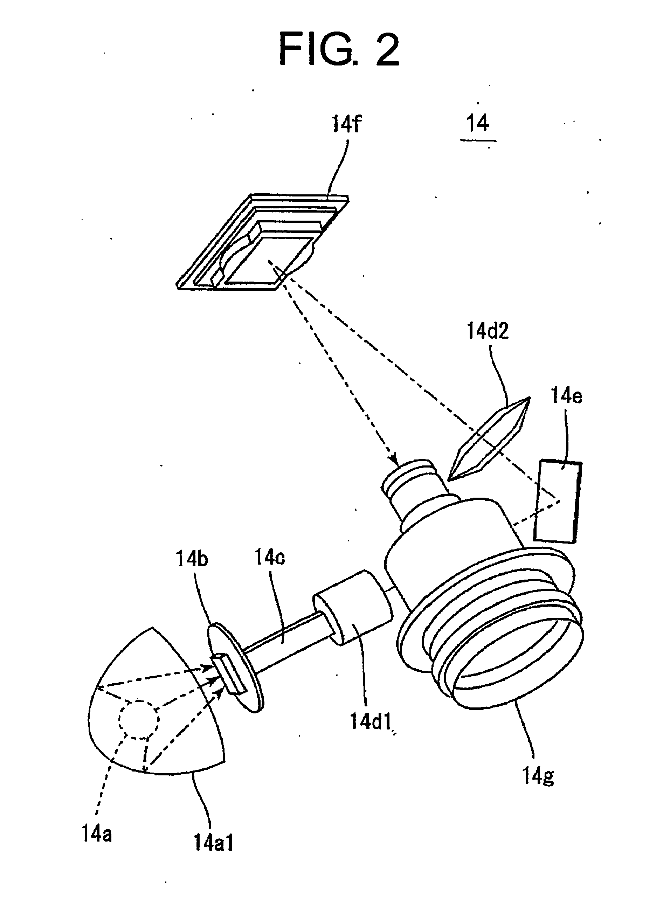

The optical system 14 generates an RGB light based on the video signal generated in the video signal processing circuit 11d, and outputs the light to a screen and the like through a projection lens. Fig. 2 is the layout of the optical system according to the present invention. As shown in Fig. 2, the optical system 14 includes a lamp 14a, a color wheel 14b, a light pipe 14c, an illumination lens 14d, a mirror 14e, DMD 14f, and a projection lens 14g. For convenience in explanation, having a plane mounted with the projection lens 14g of the case 16 as a front surface, front and rear sides of the front surface are designated as a front-to-rear direction, and a right-to-left direction thereof is designated as a width direction.

As illustrated in Fig. 2, when the optical system 14 is accommodated in the case 16, the lamp 14a is placed on the side of the front portion of the case 16 to produce white light. Moreover, the light produced from the lamp 14a is outputted towards the color wheel 14b by a parabolic mirror shaped reflector 14a₁ that reflects light the lamp 14a had outputted towards the rear side. An example of the lamp 14a includes, but is not limited to, a halogen lamp, a metal halide lamp, a high pressure mercury lamp, a Xenon lamp and so on. Moreover, an example of the reflector 14a₁ includes, but is not limited to, a parabolic mirror, an elliptical mirror, and so on.

The color wheel 14b is approximately disk shaped. The color wheel 14b is arranged nearly in parallel to the width direction of the case 16, and three color filters of RGB are arranged at regular intervals. The color wheel 14b rotates the disk-shaped color filters at a predetermined speed, the color filters constituting different spectrum filters according to a predetermined range of angle. At the same time, the incident white light from the lamp 14a is decomposed into R,G,B colored light components sequentially by passing through the spectrum filter. The light pipe 14c has a pillar shape having an approximately globular shaped cross-section, and is aligned in the width direction of the case 16 to collimate the light having passed through the color wheel 14b to an approximately parallel light, and guides it to the mirror 14e (to be described).

The mirror 14e is arranged on the opposite side of the lamp 14a, when seen from the front side of the case 16. The mirror 14e mostly reflects the collimated light emitted from the light pipe 14c onto the opposite side of the rear side. An illumination lens 14d1 concentrates light from the light pipe 14c onto the mirror 14e. Another illumination lens 14d2 concentrates the reflected light from the mirror 14e onto the DMD 14f.

The DMD 14f is arranged at a position to be able to irradiate the collimated light having been reflected from the mirror 14e, and includes a plurality of micro mirrors as modulation devices for modulating the respective RGB colors by pixel. These micro mirrors are arranged in a designated array. Moreover, the micro mirrors are controlled individually, based on the RGB signal outputted from the video signal processing circuit 11d. The reflecting surface of each of the micro mirror can be inclined by a predetermined degree (for example, 12 degrees). The DMD 14f drives, based on the RGB signal, each of the micro mirrors in time-sharing manner to change luminance of light reflected onto the mirror 14e. In this manner, the DMD 14f forms a predetermined image and reflects an image light towards the projection lens 14g.

The projection lens 14g has an optical axis facing the front side of the case 16, and projects the image light having been modulated by the DMD 14f onto a screen in an enlarged form. In order to prevent non-clearness of a projected image due to chromatic aberration of RGB colored lights, the projection lens 14g is constituted by sublenses that are arranged along the optical axis direction of a plurality of condensing devices.

In the drawing, the dotted line with an arrow indicates the traveling direction of light. The white light emitted from the lamp 14a is decomposed into RGB colored light components in the color wheel 14b. In addition, these decomposed lights are gathered together by the light pipe 14c and guided towards the mirror 14e. The light emitted from the light pipe 14c is concentrated by the illumination lens 14d1, which is interposed between the light pipe 14c and the mirror 14e, and incidents onto the mirror 14e. The light is then reflected by the mirror 14e to the rear side, is concentrated by the illumination lens 14d2, and incidents onto the DMD 14f. And, the image light is modulated by the DMD 14f, and is projected, in an enlarged form, onto the screen by the projection lens 14g.

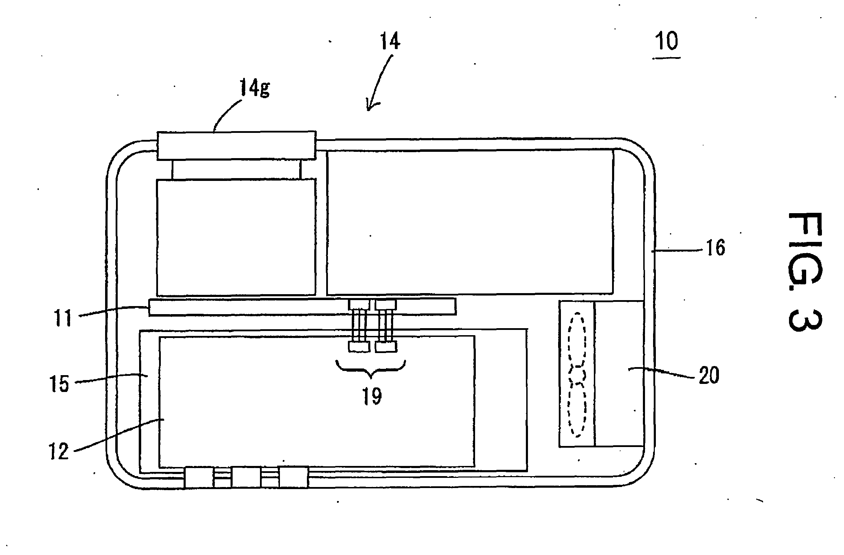

Fig. 3 is a top view of the optical system and every substrate accommodated in a case for a projector 10 according to the present invention. As shown in Fig. 3, the projector 10 includes a digital substrate 11, I/O terminals 12b, a power substrate 13, and an optical system 14, each being arranged at a predetermined position by using the inner walls of a resin-made case 16 and a metal frame 15. In detail, the optical system 14 is formed by screw fixing the projection lens 14g towards the front side of the case 16 from an inner wall of the case 16. In addition, the digital substrate 11 is arranged on the rear side of the optical system 14 in a manner that it is approximately perpendicular with the bottom of the case 16 and at the same time, its device mount surface is screw fixed towards the rear side. Preferably, the DMD 14f is mounted on the digital substrate 11 because it, being on the rear side of the projection lens, can make a light source from the mirror 14e incident on the projection lens 14g.

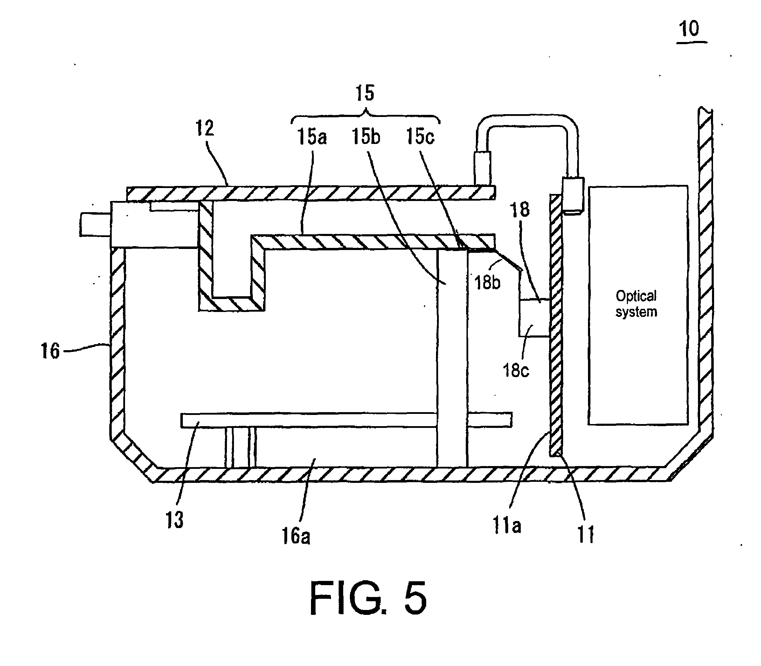

Furthermore, the power substrate 13 is screw fixed to the rear side of the digital substrate 11 so that the device mount surface, it being in state of facing upward, can be positioned nearly in parallel to the bottom of the case 16. Lastly, the I/O substrate 12 which is screw fixed to the upper side of the metal frame 15 is secured to the case 16 to make it positioned on the upper side of the power substrate 13 per frame 15. As shown in Fig. 5, the frame 15 includes a substrate fixing surface 15a that is screw fixed to the I/O substrate 12, and a foot section 15b that is screw fixed to the case 16 to arrange the I/O substrate 12 at a predetermined position of the case 16 by extending it to be nearly perpendicular to the substrate fixing surface 15A. At this point, since the frame 15 is made of a metallic material, it operates as ground if being connected to the GND line of the I/O substrate 12 and at the same time, protects the I/O substrate 12 from noise radiated from the power substrate 13.

In addition, a fan 20 for cooling an interior region of the case 16 is arranged at the end portion in the width direction of the case, so that cooling air can be blown in the width direction of the case 16. Accordingly, the cooling air blown from the fan 20 travels along the width direction of the case 16, and is used for cooling the digital substrate 11, the power substrate 13, and the I/O substrate 12.

### [2. Configuration of Shielding Plate]

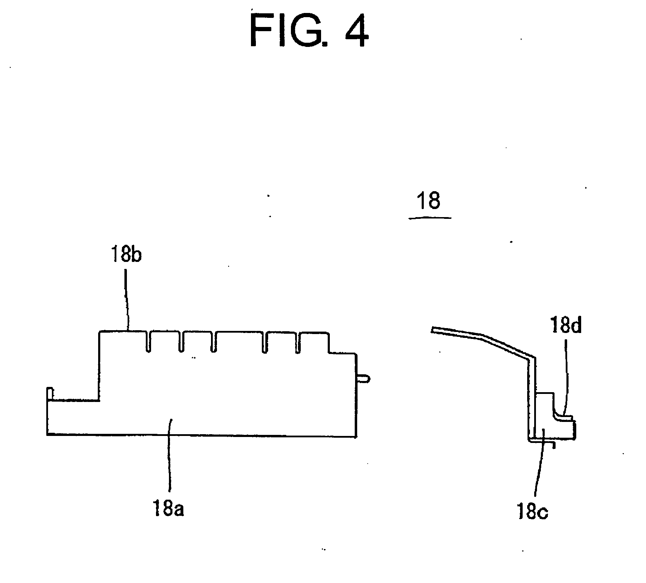

With the above-described arrangement, the I/O substrate 12 is arranged by the frame 15 on the upper portion of the rear side of the digital substrate 11 and at the same time, on the upper portion of the power substrate 13. Here, in order to suppress the influence of unnecessary radiation (EMI) from the digital substrate 11 upon the I/O substrate 12 arranged on the upper portion of the rear side, a shielding plate 18 is employed to shield a device mount surface 11a of the digital substrate 11. Fig. 4 shows a front view and a side view of the shielding plate 18. As depicted in Fig. 4, the shielding plate 18 includes a thin shielding surface 18a having an approximately rectangular shaped cross section, and a cushion surface 18b having a wrinkled shape that is formed by bending a peripheral portion of the top of the shielding surface 18a by a predetermined length. The shielding plate 18 further includes a pair of foot surfaces 18c and 18d, each of which is formed by having one side with the cushioning surface 18b as the upper side, and extending part of both sides of the shielding surface 18a, respectively, by a predetermined length in an opposite direction of the bending direction of the cushioning surface 18b.

First, a device such as an IC circuit is as a component that radiates EMI. Therefore, the shielding surface 18a of the shielding plate 18 should be designed in an adequate shape to shield the IC circuit of the device mount surface 11a. In one embodiment of the present invention, since the IC circuits are regularly arranged on the upper portion of the digital substrate 11 in the width direction, the shielding surface 18a is formed into a shape for covering the entire upper portion of the digital substrate 11a. In addition, each of the foot surfaces 18c and 18d is preferably higher than the devices including IC circuits mounted on the device mount surface 11a. In this embodiment, a distance from the shielding surface 18a to the end portion of each of the food surface 18c and 18d is about 10 millimeters.

Any material capable of intercepting unnecessary radiation (EMI) may be used for the shielding plate 18. Moreover, it is desirable to use a material that can provide elasticity to the cushioning surface 18b when its end portion is bent by a predetermined length to form the cushioning surface 18b. In this particular embodiment of the invention, the shielding plate 18 was made of DR-9 having a thickness of 0.2 millimeter. And a cutting groove was formed in the cushioning surface 18b to enhance elasticity of the cushioning surface 18b and to improve ventilation effects of cooling air (to be described).

The following now explains how to install the shielding plate 18 on the digital substrate 11. Fig. 5 is a side view of each substrate arranged in the case. As shown in Fig. 5, the shielding plate 18 is soldered onto the device mount surface 11a of the digital plate 11 in a manner that the cushioning surface 18b of the shielding plate 18 faces upwards and the bending direction of the cushioning surface 18b faces the opposite direction of the device mount surface 11a. At this time, slits into which the foot surfaces 18c and 18d of the shielding plate 18 need to be inserted are formed in the digital substrate 11, and the ends of the foot surfaces 18c and 18d being inserted into the sleets were soldered from the opposite side of the device mount surface 11a.

In this state, when the I/O substrate 12 on the upper portion of the rear side of the digital substrate 11 was screw fixed onto the case 16 through the frame 15, the frame 15 and the case 16 were screw fixed to each other, thereby letting the end portion of the cushioning surface 18b come in contact with a rear surface 15c of the frame 15. At this time, gap or interference in parallel to the height of the arrangement of the frame 15 occurs between the rear surface 15c of the frame 15 and the cushioning surface 18b. However, the cushioning surface 18b is elastic, if interference occurs between the rear surface 15c of the frame 15 and the cushioning surface 18b, the cushioning surface 18b is pressed down by the frame 15 and at the same time, an elastic force is applied to the reverse direction from the press(ed) direction. In result, the rear surface 15c of the frame 15 is closely adhered to the end portion of the cushioning surface 18b. Therefore, it is necessary to fix the height of the frame 15 in a way that no gap is created between the frame 15 and the end of the cushioning surface 18b, nor between the frame 15 and the bottom surface of the I/O substrate 12. In doing so, the positioning of components for arrangement of each substrate can be absorbed by the elastic force of the cushioning surface 18b. In other words, the assembly of components can be done more easily.

Since the shielding plate 18 is fixed by soldering the foot surfaces 18c and 18d onto the device mount surface 11a of the digital substrate 11, gap is formed between the device mount surface 11a and the shielding surface 18a. Moreover, since each of the foot surfaces 18c and 18d is formed by extending part of both sides of the shielding surface 18a, respectively, cooling wind blown from the fan 20 is not intercepted by the foot surfaces 18c and 18d, but flows into the gap between the device mount surface 11a and the shielding surface 18a. Therefore, the shielding plate 18 does not interfere with the cooling operation on the exothermic components such as IC circuits mounted on the device mount surface 11a of the digital substrate 11, and unnecessary radiation (EMI) can be effectively suppressed.

In addition, since the shielding plate 18 comes in contact with the frame 15, it functions as ground, and the frame 15 absorbs EMI radiated from the digital substrate 11. Thus, compared with a case where the entire EMI radiating region has to be covered, the present invention method makes it possible to reduce the size of the shielding plate as well as to effectively prevent unnecessary radiation of ENH even inside the frame having a narrow space.

### [3. Summary]

As explained so far, the projector according to claim 2 includes, an optical unit for projecting an image by using a projection lens, based on a light source from a lamp; a digital substrate mounted with a digital IC for controlling the optical unit; an input/output substrate mounted with an input terminal at which video signals or audio signals from external equipment are received and a remote control signal receiving unit; and a metal frame which arranges the input/output substrate on the upper portion of the rear side of the digital substrate and which grounds the input/output substrate at the same time. Here, a shielding plate having an approximately rectangular shaped shielding surface is fixed to the digital substrate in a way that it covers IC circuits mounted on a device mount surface of the digital substrate and at the same time, contacts the shielding plate and the frame.

The foregoing embodiments are merely exemplary and are not to be construed as limiting the present invention. The present teachings can be readily applied to others.
The description of the present invention is intended to be illustrative, and not to limit the scope of the claims. Many alternatives, modifications, and variations will be apparent to those skilled in the art.

## Claims

1. A projector, comprising:
a case;
a projection lens arranged at a side of the case;
a lamp arranged in the case for projecting a light source in a width direction, given that a plane mounted with the projection lens of the case is designated as a front surface, front and rear sides of the front surface are designated as a front-to-rear direction, and a right-to-left direction thereof is designated as the width direction;
a color wheel rotating a color filter at a predetermined speed, the color filter comprising a set of color filters comprising different spectrum filters according to a predetermined range of angle, while arranging the color filter in a way that incident light from the lamp to the color filter is projected in the width direction;
a light pipe collimating light having passed through the color wheel to an approximately parallel light;
a mirror arranged to reflect a light source projected from the light pipe towards the rear side;
Digital Micro-Mirror Device arranged at a rear portion of the projection lens, for changing luminance of the incident light source from the mirror with a plurality of micro mirrors arranged in a predetermined array, and projecting the light source with the changed luminance to the projection lens;
a digital substrate having a device mount surface formed on side to mount an integrated circuit (IC) that controls one of the Digital Micro-Mirror Device and the entire circuit;
a power source on a power substrate for supplying required power to the digital substrate;
an input/output substrate for mounting input/output terminals, and converting an infrared signal transmitted from a remote control to a control signal of a predetermined voltage level and outputting the control signal to the digital substrate;
a fan arranged at an end portion in the width direction of the case for cooling heat inside the case; and
a metal frame comprising of a substrate fixing surface to which the input/output substrate is fixed by a fastener, and foot sections formed by extension in substantially perpendicular direction to the substrate fixing surface and being fixed to the case by fasteners to arrange the input/output substrate at a predetermined position of the case;
the digital plate is arranged approximately in perpendicular to the bottom surface of the frame while making, on the rear side of the projection lens, a device mount surface of an the IC circuit face the rear side while the IC circuit is covered with a thin shielding plate capable of suppressing unnecessary radiation of EMI from the IC circuit mounted on the device mount surface,
wherein a frame fastener secures the input/output substrate to the upper portion of the rear side of the digital substrate so as to make the input/output substrate be approximately in parallel to the bottom surface of the case, and
the shielding plate is composed of a rectangular thin shielding surface,, a cushion surface having a wrinkled shape that is formed by bending one end of the shielding surface by a predetermined length, and a pair of foot surfaces, each of which is extending part of both sides of the shielding surface, respectively, by a predetermined length in an opposite direction of the bending direction of the cushioning surface in which the foot surfaces and the digital substrate are soldered to make the shielding surface cover the device mount surface of the digital substrate while making an end portion of the cushioning surface contact with the rear surface of the substrate fixing surface of the frame.

2. A projector comprises:
an optical unit for projecting an image by using a projection lens, based on a light source from a lamp;
a digital substrate mounted with a digital integrated circuit (IC) for controlling the optical unit;
an input/output substrate mounted with an input terminal at which one of video signals and audio signal from external equipment are received and a remote control signal receiving unit; and
a metal frame which arranges the input/output substrate on the upper portion of the rear side of the digital substrate while grounding the input/output substrate, and
a substantially rectangular shielding plate fixed to the digital substrate, covering IC circuits mounted on a device mount surface of the digital substrate, while contacting the shielding plate and the frame.

3. The projector according to claim 2, wherein the shielding plate is formed in a thin shape to provide an elastic force in a thickness direction of a rectangular cross-section thereof, includes a cushioning surface formed by bending one end of the shielding surface by a predetermined length, and is fixed to the digital substrate to contact the frame and the cushioning surface.

4. The projector according to claim 3, wherein the shielding plate includes a pair of foot surfaces, each of which is formed by having one side with the cushioning surface as a vertical side, and extending part of both sides of the shielding surface, respectively, by a predetermined length in an opposite direction of the bending direction of the cushioning surface, and is fixed to the digital substrate in use of the foot surfaces.
